(19) Europäisches Patentamt
European Patent Office
Office européen des brevets

(11) Veröffentlichungsnummer: **0 236 772**
**A1**

# (12) EUROPÄISCHE PATENTANMELDUNG

(21) Anmeldenummer: **87101979.0**

(22) Anmeldetag: **12.02.87**

(51) Int. Cl.⁴: **C08C 19/08**, C08F 36/18

(30) Priorität: **19.02.86 DE 3605333**

(43) Veröffentlichungstag der Anmeldung:
**16.09.87 Patentblatt 87/38**

(84) Benannte Vertragsstaaten:
**DE FR GB**

(71) Anmelder: **BAYER AG**
**Konzernverwaltung RP Patentabteilung**
**D-5090 Leverkusen 1 Bayerwerk(DE)**

(72) Erfinder: **Musch, Rüdiger, Dr.**
**Altenberger-Dom-Strasse 169**
**D-5060 Bergisch-Gladbach 2(DE)**
Erfinder: **Müller, Eberhard, Dr.**
**Pfauenstrasse 19**
**D-4047 Dormagen(DE)**
Erfinder: **Hohmann, Gerhard, Dr.**
**An der Steinrütsch 35**
**D-5090 Leverkusen(DE)**
Erfinder: **Schabel, Karl-Heinz**
**Unterwietsche 14**
**D-5093 Burscheid(DE)**

## (54) Verfahren zur Herstellung von Polychloropren.

(57) Lagerstabiles Polychloropren erhält man unter Verwendung von Xanthogendisulfiden als Molekulargewichtsregler, wenn man vor Abtrennung des durch wäßrige Emulsionspolymerisation gewonnenen Polymers aus der wäßrigen Phase ein Peptisationsmittel zusetzt und anschließend die Polymersuspension in üblicher Weise aufarbeitet.

EP 0 236 772 A1

Xerox Copy Centre

## Verfahren zur Herstellung von Polychloropren

Die Erfindung betrifft ein Verfahren zur Herstellung von Polychloropren unter Verwendung von Xanthogendisulfiden als Molekulargewichtsregler.

Es ist bekannt, die Polymerisation von Chloropren unter Einsatz von Xanthogendisulfiden als Molekulargewichtsregler (Kettenübertragungsmittel) durchzuführen. Man erhält auf diese Weise Produkte, die gegenüber den mit Mercaptanen geregelten Polymerisation ein günstigeres Vulkanisationsverhalten zeigen und zu Vulkanisation mit höheren Festigkeiten führen.

Ein Nachteil des Einsatzes von Xanthogendisulfiden ist der Anstieg der Mooney-Viskosität bei der Lagerung des unvulkanisierten Kautschuks. Gegenüber früher bekannten Xanthogendisulfiden, beispielsweise aus DE-OS 23 06 610, haben die nach der EP-OS 53 319 erhaltenen Verbindungen, die sich durch einen besonders geringen Gehalt an elementarem Schwefel auszeichnen, in diesem Punkt zu Verbesserungen geführt, die jedoch noch nicht ausreichend sind.

Es wurde nun gefunden, daß man lagerstabile Polychloroprene unter Verwendung von Xanthogendisulfiden als Molekulargewichtsregler herstellen kann, wenn man vor der Abtrennung des durch wäßrige Emulsionspolymerisation gewonnenen Polymers aus der wäßrigen Phase ein Peptisationsmittel zusetzt und anschließend die Polymersuspension in üblicher Weise aufarbeitet.

Gegenstand der Erfindung ist daher ein Verfahren zur Herstellung von Polychloropren durch wäßrige Emulsionspolymerisation von Chloropren mit 0 -20 Gew.-% mit Chloropren copolymerisierbarer Monomerer in Gegenwart von Xanthogendisulfiden und einem Polymerisationsinitiator und Aufarbeitung der Polymersuspension zum Festkautschuk, dadurch gekennzeichnet, daß man nach der Polymerisation und vor der Abtrennung des Polymeren aus der wäßrigen Suspension dem Reaktionsgemisch ein Peptisationsmittel zusetzt.

Bevorzugte Xanthogendisulfide entsprechen der Formel

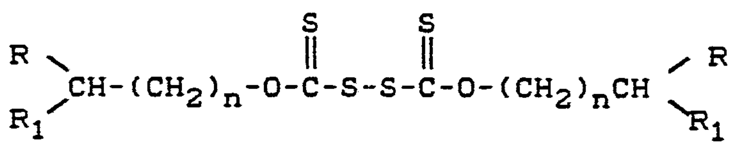

in der

n 0 bis 4,

R und $R_1$ unabhängig voneinander Wasserstoff, $C_1$-$C_6$-Alkyl, $C_5$-$C_5$-Cycloalkyl oder gemeinsam mit der CH-Gruppe ein sauerstoffhaltiges, gegebenenfalls 1-bis 3-fach durch $C_1$-$C_4$-Alkyl substituiertes, hetero cyclisches Ringsystem mit 5 -8 Ringgliedern darstellen,

insbesondere solche der EP-OS 53 319 mit einem Gehalt an freiem Schwefel von kleiner als 2 Gew.-%.

Beispiele sind Dimethylxanthogendisulfid, Diethylxanthogendisulfid, Dipropylxanthogendisulfid, Dibutylxanthogendisulfid, Dicyclohexylxanthogendisulfid, Bis-(1,3-dioxolan-4-yl-methyl)-xanthogendisulfid, Bis-(5-ethyl-1,3-dioxan-5-yl-methyl)-xanthogendisulfid (MTX), Diisopropylxanthogendisulfid.

Bevorzugte Polymerisationsinitiatoren sind Formamidinsulfinsäure, Kaliumperoxodisulfat, Mischungen aus Formamidinsulfinsäure und Kaliumoxodisulfat, Mischungen aus Kaliumperoxodisulfat und Natrium-$\beta$-anthrachinonsulfonat oder Mischungen von Formamidinsulfinsäure, Kaliumperoxodisulfat und Natrium-$\beta$-anthrachinonsulfonat sowie Kombinationen der verstehend genannten Initiatoren und Initiatormischungen mit Natriumdithionit oder Natriumdithionit allein.

Die Polymerisationstemperatur beträgt insbesondere 0 bis 60° C.

Bevorzugte Peptisationsmittel sind Tetraalkylthiuramdisulfide allein oder in Kombination mit nukleophil wirkenden Substanzen, wie Aminen, Mercaptobenzthiazolen oder Diarylpolysulfiden. Die Alkylgruppen der Tetraalkylthiuramdisulfide tragen vorzugsweise 1 -4 C-Atome, wobei Tetraethylthiuramdisulfid besonders bevorzugt ist.

Die Aufarbeitung des Latex zum Festkautschuk erfolgt vorzugsweise nach der bekannten Methoden der Gefrierkoagulation. Der Zusatz des Peptisierungsmittel kann vor oder nach dem Entfernen restlicher Monomerer aus dem Polymerlatex erfolgen.

Das nach dem erfindungsgemäßen Verfahren erhaltene Polychloropren eignet sich für die Herstellung von Klebstoffen und Gummiartikeln. Dabei zeigt sich, daß durch den Zusatz des Peptisationsmittels der Viskositätsanstieg bei der Lagerung vermieden wird, aber dennoch die Vulkanisate die bekannt hohe Festigkeit aufweisen.

Geeignete Comonomere sind z.B. Acrylnitril, Methacrylnitril, Acrylsäureester, Methacrylsäureester, Vinylidenchlorid, Styrol, Vinyltoluole, Butadien-(1,3), 1-Chlorbutadien-(1,3) 2,3-Dichlorbutadien-(1,3), 2-Chlor-3-methylbutadien-(1,3) und Schwefel, wobei Schwefel und 2,3-Dichlorbutadien-(1,3) bevorzugt sind.

Für die Herstellung vernetzter Produkte eignen sich als Comonomere insbesondere zweifach mit (Meth)acrylsäure veresterte Alkylenglykole, z.B. Ethylenglykoldimethacrylat.

Die Xanthogensulfide werden insbesondere in einer Menge von 0,3 bis 5 mmol je 100 g Monomere, eingesetzt.

Die Peptisationsmittel werden vorzugweise in einer Menge von 2 • $10^{-5}$ bis 3 • $10^{-3}$ Mol je 100 g Monomere, bevorzugt $10^{-4}$ bis 1,5 • $10^{-3}$ Mol eingesetzt.

Bezogen auf die zu polymerisierenden Monomeren werden vorzugsweise 0,01 bis 0,3 Gew.-% Natriumdithionit eingesetzt.

Werden als Polymerisationsinitiator Mischungen, enthaltend Natriumdithionit eingesetzt, so beläuft sich das Gewichtsverhältnis der üblichen Initiatoren zu Natriumdithionit von 0,05 -5:1, bevorzugt 0,1 -3:1 Gewichtsteilen.

Werden als übliche Initiatoren eine Mischung von FAS und Kaliumperoxodisulfat verwendet, so beträgt deren Gewichtsverhältnis zueinander 1:10 -10:1 Gewichtsteile. Gelangt eine Mischung aus Kaliumperoxodisulfat und Anthrachinon-$\beta$-sulfonsaures Natrium zum Einsatz, so können diese Komponenten in dem Gewichtsverhältnis, wie es der US-PS 2 426 854 entnommen werden kann, eingesetzt werden. Das Gewichtsverhältnis von FAS/Kaliumperoxodisulfat und Anthrachinon-$\beta$-sulfonsaures Natrium kann im Rahmen der Angaben in der DE-OS 2 650 342 variiert werden.

Für Klebstoffrohstoffe wird üblicherweise auf Comonomere verzichtet, für Gummirohstoffe ist 2,3-Dichlorbutadien und im Falle vernetzter Materialien Ethylenglykoldimethacrylat das bevorzugte Comonomer.

Herstellung der Xanthogendislufide

(a) Bis-(5-ehtyl-1,3-dioxan-5-ylmethyl)-xanthogendisulfid (MTX)

Die Herstellung erfolgt nach der in DE-OS 2 306 610, Beispiel 5 beschriebenen Methode.
Man erhält ein gelblich gefärbtes Produkt
Fp: 42-46° C
Schwefelgehalt: 4,6 %
Die Ermittlung des Schwefelgehaltes erfolgt nach der in der EP-OS 53 319 beschrieben HPLC-Methode.

(b) MTX-Herstellung nach der in EP-OS 53 319, Beispiel 3 beschriebenen Methode.

Man erhält ein fast farbloses Produkt.
Fp: 51-53° C
Schwefelgehalt: 0,6 %.

(c) Diethylxanthogendisulfid

Man stellt das Produkt nach EP-OS 53 319, Beispiel 5 her.
Fp 22-24° C
Schwefelgehalt: 0,95 %.

## Beispiel 1

10 kg Chloropren werden in 15 kg Wasser, dem 550 g disproportionierte Harzsäure (Feststoffgehalt 70 Gew.-%), 50 g Natriumsalz eines Napthalinsulfonsäure-Formaldehyd-Kondensationsproduktes, 60 g Natriumhydroxid, 35 g MTX nach Methode (a) und 10 g Kaliumperoxodisulfat zugesetzt sind, emulgiert. Als Katalysatorlösung verwendet man eine 3 gew.-%ige wäßrige Formamidinsulfinsäurelösung.

Die Emulsion wird mit Stickstoff gespült, auf 40° C erwärmt und durch Zugabe von Katalysatorlösung gestartet.

Während der Polymerisation wird weiter Katalysatorlösung so eindosiert, daß die Temperatur des Ansatzes 45° C nicht übersteigt. Nach Monomerumsätzen von 28 und 55 % werden jeweils weitere 17,5 g MTX nach Methode (a) eindosiert, die Polymerisation nach einem Monomerumsatz von 70 % durch Zusatz von 12 g Brenzcatechin abgestoppt und das überschüssige Monomere bei vermindertem Druck durch Wasserdampfdestillation abgetrennt.

Man senkt den pH-Wert des Latex auf 6,5, friert das Polymere auf einer Kühlwalze aus und trocknet es. Die Mooney-Viskosität (M1-4') des Polymeren liegt bei 73 ME.

Beispiel

Man verfährt wir im Beispiel 1, nur werden vor Polymerisationsbeginn 30 g und bei 30 % sowie 57 % Monomerumsatz je 15 g MTX nach Methode (b) eindosiert. Die Mooney-Viskosität des Polymeren liegt bei 76 ME.

Beispiel 3

Man verfährt wir in Beispiel 1, setzt jedoch vor Polymerisationsbeginn 19 g und bei 30 % sowie 54 % Monomerusatz je 9,5 g Diethylxanthogendisulfid nach Methode (c) zu. Die Mooney-Viskosität des Polymeren liegt bei 70 ME.

Beispiel 4

Man polymerisiert wie in Beispielen 1 bis 3, setzt jedoch dem abgestoppten Latex vor oder nach dem Entgasen des Monomeren Tetraethylthiuramdisulfid (TETD) und Dibutylamin (nDBA) zu. Die zugesetzten Mengen sind der Tabelle 1 zu entnehmen. Die Peptisation und Aufarbeitung wird analog DE-OS 2 018 736 durchgeführt.

Alterungsverhalten des Rohpolymeren Man ermittelt die Viskosität des frischen und bei 70° C im Trockenschrank gealterten Polymeren nach Mooney (DIN 53 523). Je stabiler die Produkte sind, um so geringer ist die Viskositätsdifferenz (ΔML) zwischen den Messungen.

**Tabelle 1**

| Polymer aus Beispiel | Zusatz von TETD zum entgasten Latex | Zusatz von nDBA (Gew.-%, bez. auf Polymer) | ML-4 (ME) sofort | nach 6 d $70^0$ C | 12 d $70^0$ C | (ΔML) (ME) |
|---|---|---|---|---|---|---|
| 1 | 0 | 0 | 73 | 88 | 97 | 24 |
| 1 | 0,05 | 0,005 | 69 | 70 | 72 | 3 |
| 1 | 0,2 | 0,002 | 67 | 66 | 68 | 1 |
| 2 | 0 | 0 | 76 | 80 | 87 | 11 |
| 2 | 0,1 | 0 | 72 | 72 | 74 | 2 |
| 3 | 0 | 0 | 70 | 75 | 81 | 11 |
| 3 | 0,1 | 0 | 68 | 70 | 74 | 6 |

Beispiele 5-7

Herstellung von Polychloropren für den Einsatz als Klebstoffrohstoff.

Man polymerisiert wie in Beispiel 1 bei +10° C in Gegenwart von folgenden Mengen an Xanthogendisulfid (Gesamtmenge) (5) 65 g, (6) 61 g, (7) 33 g.

Als Aktivatorlösung setzt man an Stelle der Formamidinsulfinsäure eine 1 gew.-%ige wäßrige Natriumdithionitlösung ein.

Die Aufarbeitung wird analog Beispiel 1 durchgeführt.

Änderung der Lösungsviskosität von Polychloropren Klebstoffrohstoffen

2,5 g des Polymers werden in 47,5 Toluol gelöst, 1 h bei 23° C im Wasserbad getempert und danach die Viskositätsmessung im Brookfield-Viskosimeter LVT mit Adapter nach DIN 53 019 durchgeführt.

Die Lösungsviskosität wird vom frisch hergestellten und bei 70° C im Trockenschrank gealterten Polymer bestimmt. Die Ergebnisse sind in Tabelle 2 festgehalten.

## T a b e l l e   2

| Polymer aus Beispiel | Zusatz von TETD zum unentgasten Latex | nDBA | Zusatz von TETD zum entgasten Latex | Lösungsviskosität LV sofort | Lösungsviskosität 6 Tage 70° C |
|---|---|---|---|---|---|
| 5*) | 0 | 0 | 0 | 72 | 114 |
| 5 | 0,1 | 0,01 | 0,1 | 64 | 66 |
| 5 | 0 | 0 | 0,2 | 65 | 68 |
| 6*) | 0 | 0 | 0 | 70 | 93 |
| 6 | 0 | 0 | 0,1 | 56 | 68 |
| 6 | 0 | 0 | 0,2 | 66 | 66 |
| 6 | 0 | 0 | 0,5 | 65 | 61 |
| 6 | 0,05 | 0,005 | 0,2 | 64 | 61 |
| 7*) | 0 | 0 | 0 | 77 | 102 |
| 7 | 0 | 0 | 0,1 | 74 | 78 |

*) Vergleichsbeispiel

## Ansprüche

1. Verfahren zur Herstellung von Polychloropren durch wäßrige Emulsionspolymerisation von Chloropren mit 0 -20 Gew.-% mit Chloropren copolymerisierbarer Monomerer in Gegenwart von Xanthogendisulfiden und einem Polymerisationsinitiator und Aufarbeitung der Polymersuspension zum Festkautschuk, dadurch gekennzeichnet, daß man nach der Polymerisation und vor der Abtrennung des Polymeren aus der wäßrigen Suspension dem Reaktionsgemisch ein Peptisationsmittel zusetzt.

2, Verfahren nach Anspruch 1, dadurch gekennzeichnet, daß die Xanthogendisulfide der Formel

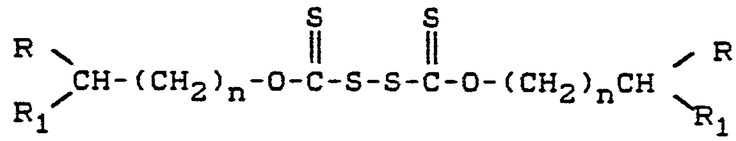

entsprechen, in der
n 0 bis 4,
R und $R_1$ unabhängig voneinander Wasserstoff, $C_1$-$C_6$-Alkyl, $C_5$-$C_8$-Cycloalkyl oder gemeinsam mit der CH-Gruppe ein sauerstoffhaltiges, gegebenenfalls 1-bis 3-fach durch $C_1$-$C_4$-Alkyl substituiertes, heterocyclischen Ringsystem mit 5-8 Ringgliedern darstellen.

3. Verfahren nach Anspruch 1, dadurch gekennzeichnet, daß als Polymerisationsinitiatoren Formamidinsulfinsäure, Kaliumperoxodisulfat, Mischungen aus Formamidinsulfinsäure und Kaliumoxodisulfat, Mischungen aus Kaliumperoxodisulfat und Natrium-β-anthrachinonsulfonat oder Mischungen von Formamidinsulfinsäure, Kaliumperoxodisulfat und Natrium-β-anthrachinonsulfonat, sowie Kombinationen der vorstehend genannten Initiatoren und Initiatormischungen mit Natriumdithionit oder Natriumdithionit allein verwendet werden.

4. Verfahren nach Anspruch 1, dadurch gekennzeichnet, daß als Peptisationsmittel Tetraalkylthiuramdisulfide allein oder in Kombination mit nukleophil wirkenden Substanzen verwendet werden.

Europäisches Patentamt

# EUROPÄISCHER RECHERCHENBERICHT

Nummer der Anmeldung

EP 87 10 1979

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 984 609 (P. BRANLARD et al.) * Patentansprüche 1-12; Spalte 2, Zeilen 23-30 * | 1-4 | C 08 C 19/08<br>C 08 F 36/18 |
| Y | EP-A-0 053 319 (BAYER) * Patentanspruch 9 * | 1-4 | |
| A | DE-A-2 650 342 (BAYER) * Patentanspruch 1 * | 3 | |
| A | FR-A-2 089 811 (BAYER) * Patentanspruch 1 * | 4 | |

RECHERCHIERTE SACHGEBIETE (Int. Cl.4)

C 08 C
C 08 F

Der vorliegende Recherchenbericht wurde für alle Patentansprüche erstellt.

| Recherchenort | Abschlußdatum der Recherche | Prüfer |
|---|---|---|
| DEN HAAG | 05-06-1987 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82